# EUROPÄISCHE PATENTSCHRIFT

(11) **EP 4 177 755 B1**
(45) Veröffentlichungstag und Bekanntmachung des Hinweises auf die Patenterteilung: **17.07.2024**
(21) Anmeldenummer: 21206705.2
(22) Anmeldetag: 05.11.2021
(51) Int. Cl.: G06F 11/07, G06F 12/0804

(54) **VORRICHTUNG UND VERFAHREN ZUR SPEICHERUNG VON ECHTZEITDATEN EINER MEDIZINISCHEN BEHANDLUNG**
DEVICE AND METHOD FOR STORING REAL-TIME DATA OF MEDICAL TREATMENT
DISPOSITIF ET PROCÉDÉ DE SAUVEGARDE DES DONNÉES EN TEMPS RÉEL D'UN TRAITEMENT MÉDICAL

(43) Veröffentlichungstag der Anmeldung: 10.05.2023
(73) Patentinhaber: Fresenius Medical Care Deutschland GmbH, 61352 Bad Homburg (DE)
(72) Erfinder: Tellert, Wolfgang, 61352 Bad Homburg (DE)
(74) Vertreter: Hitzelberger, Christoph Michael

(56) Entgegenhaltungen:
- US-A- 5 904 708

## Beschreibung

### Technisches Gebiet

Die vorliegende Erfindung betrifft ein Verfahren zur ausfallsicheren Speicherung von Echtzeitdaten. Ferner betrifft die vorliegende Erfindung eine medizintechnische Vorrichtung zur Durchführung medizinischer Behandlungen, insbesondere Dialysebehandlungen.

### Hintergrund

Medizintechnische Vorrichtungen erlauben es, Patienten mit unterschiedlichen physiologischen Leiden zu therapieren und lebensnotwendige Körperfunktionen teilweise oder vollständig zu ersetzen. Dabei hat die Sicherheit des Patienten stets höchste Priorität. Ziel ist es, unter Verwendung geeigneter Sensorik einerseits die Funktionalität der Vorrichtung innerhalb festgelegter Betriebswerte zu überwachen und andererseits physiologische Vorgänge des Patienten zu erfassen, um beispielsweise kritische Situationen zuverlässig zu erkennen bzw. mithilfe geeigneter Algorithmik frühzeitig vorherzusagen oder vorzubeugen. Kritische Situationen können beispielsweise Fehlfunktionen aller Art innerhalb der medizintechnischen Vorrichtung bzw. der mit ihr verbundenen Komponenten umfassen, welche die mit der medizintechnischen Vorrichtung durchgeführte Behandlung beeinflussen. Dies kann in der Folge, z. B. aufgrund einer falschen Medikamentengabe, zu Komplikationen für den Patienten führen. Deshalb ist eine engmaschige Überwachung medizintechnischer Vorrichtungen und damit ausgeführter Behandlungen vorteilhaft.

Innerhalb des medizinischen Gebietes der Nephrologie spielt die Nierenersatztherapie eine herausragende Rolle. Hierzu werden insbesondere Vorrichtungen verwendet, welche technisch dazu eingerichtet sind, Dialysebehandlungen durchzuführen, die sich in Hämodialysebehandlungen und Peritonealdialysebehandlungen unterteilen lassen. Bei der Hämodialyse handelt es sich um ein extrakorporales Verfahren, bei welchem das zu reinigende Blut dem Patienten entnommen und extrakorporal innerhalb eines Dialysefilter über eine semipermeable Membran an einer speziellen Dialysierflüssigkeit, dem Dialysat, zumeist im Gegenstrom vorbeigeführt wird.

Die Stoffkonzentration des Dialysats entspricht der Konzentration des Blutes eines Gesunden. Aufgrund der unterschiedlichen Stoffkonzentrationen von Blut und Dialysat diffundieren die harnpflichtigen Stoffe durch die Membran von der Blutseite der Membran auf die Dialysatseite, während gleichzeitig im Blut und im Dialysat vorhandene Elektrolyte von der Seite höherer Konzentration zur Seite niedrigerer Konzentration über die Membran des Dialysefilters diffundieren. Durch Anlegen eines Transmembrandrucks kann der Stoffwechsel zusätzlich beeinflusst werden und überschüssiges Wasser aus dem Blut entfernt werden.

Bei der Peritonealdialyse (Bauchfelldialyse) wird das gut durchblutete Peritoneum des Patienten als Dialysefilter genutzt. Eine spezielle Dialysierflüssigkeit wird auch hier verwendet und in den Bauchraum des Patienten gebracht, wo aufgrund eines Konzentrationsgradienten zwischen Blut- und Dialysatseite hauptsächlich Wasser und Ionen ausgetauscht werden können. Die Funktion der semipermeablen Membran bei der Peritonealdialyse wird dabei vom Gewebe im Bauchraum übernommen. Das Dialysat verbleibt hierbei eine festgelegte Zeit im Peritoneum des Patienten, bevor es mit den gelösten Stoffen und dem zusätzlichen Wasser wieder ausgeleitet wird. Für eine zumindest teilweise Automatisierung dieses Verfahrens werden in der Praxis spezielle Maschinen benutzt, wie z. B. das Sleep-Safe Gerät von Fresenius Medical Care.

Medizintechnischen Vorrichtungen wie Dialysegeräte verfügen über eine Vielzahl von Sensoren, die Geräte- und Patientenparameter erfassen. Durch entsprechende Auswertung der erfassten Parameter kann die medizinische Behandlung überwacht oder angepasst werden. Sensoren eines Dialysegeräts ermöglichen zum Beispiel die Messung von Druck, Leifähigkeit, Temperatur oder der Fluidzusammensetzung des Blutes oder des Dialysats. Darüber hinaus können Waagen, Kameras, Mikrofone sowie weitere Geräte und Sensoren in medizintechnischen Vorrichtungen verbaut sein oder im Datenaustausch mit diesen stehen. Typische Parameter, die im Laufe einer Dialysebehandlung gemessen werden, können beispielsweise das Ultrafiltrationsvolumen, die Blut- bzw. Dialysattemperatur oder den venösen bzw. arteriellen Druck umfassen.

Die aus den Sensoren ausgelesenen Daten können dabei im laufenden Betrieb der Vorrichtung vor, während bzw. nach der eigentlichen Behandlung generiert und auf einem nicht-flüchtigen Speichermedium zumindest zwischengespeichert werden. Hierbei kann es sich bei dem Speichermedium um intern fest verbaute Datenträger, z. B. eine Magnetfestplatte, einen Festkörperspeicher sowie eine Kombination hiervon handeln. Weiterhin denkbar sind ebenfalls nicht fest verbaute Datenträger, z. B. externe Magnetfestplatten, externe Festkörperspeicher, Speicherkarten, Smartcards oder USB-Sticks. Bei Daten, die im Rahmen medizinischer Therapien, z. B. im Rahmen von Dialysebehandlungen, erfasst werden, ist das Sicherstellen der Datenintegrität, der Vertraulichkeit sowie der Verfügbarkeit der Daten von zentraler Bedeutung. Eine umfassende Dokumentation der Behandlung ist vorteilhaft, um den Ablauf der Behandlung zu dokumentieren bzw. im Fall eines unvorhergesehenen Ereignisses, z. B. eines Vorrichtungsdefektes, das Ereignis anschließend analysieren zu können.

Während die Datenintegrität die Gewährleistung des korrekten und unveränderten Dateninhaltes erfordert, ist es für die Gewährleistung der Vertraulichkeit der erfassten Daten notwendig Mittel vorzusehen, den unbefugten Zugriff auf den Inhalt der Daten oder derer Bedeutung verhindern. Die Verfügbarkeit der Daten stellt dabei Anforderungen an den Datenzugriff, welcher auch im Fehlerfall gewährleistet sein muss. So müssen die Daten des Speichermediums verfügbar und lesbar bleiben, selbst im Fall eines unvorhersehbaren Ereignisses, beispielsweise aufgrund eines Stromausfalles.

Insbesondere bei Echtzeitdaten, die üblicherweise im Rahmen einer Dialysebehandlung generiert werden, ist die Wahrscheinlichkeit eines Datenverlustes erhöht. Echtzeitdaten werden kontinuierlich durch Sensoren der medizintechnischen Vorrichtung erzeugt und sofort oder möglichst zeitnah auf einem Speichermedium gespeichert. Hierfür ist es in der Regel erforderlich, stets neuen Speicherplatz auf dem Speichermedium bereitzustellen. Unvorhergesehene Ereignisse, wie beispielsweise Stromausfälle, können dazu führen, dass Speicherbereiche des Speichermediums unvollständig und/oder fehlerhaft beschrieben werden, was im ungünstigsten Fall zu einem vollständigen Datenverlust führen kann. US5904708 A offenbart US 5 904 708 A betrefft ausfallsicheren Speicherung von Echtzeitdaten eine medizinische Behandlung,

Aufgabe der vorliegenden Erfindung ist es deshalb, ein verbessertes Sicherungskonzept zur Speicherung von Echtzeitdaten einer medizinischen Behandlung bereitzustellen, um Datenverluste vorzubeugen, sowie die Vertraulichkeit und die Unverfälschtheit sensibler medizinischer Daten sicherzustellen.

### Zusammenfassung der Erfindung

Gelöst wird diese Aufgabe durch ein Verfahren nach Anspruch 1, eine medizintechnische Vorrichtung nach Anspruch 12, ein Computerprogramm nach Anspruch 14 und einen computerlesbaren Datenträger nach Anspruch 15.

Demnach wird ein Verfahren vorgeschlagen, das eine ausfallsichere Speicherung von Echtzeitdaten ermöglicht, die eine medizinische Behandlung betreffen. Das Verfahren umfasst das temporäre Speichern der Echtzeitdaten in einen Ringpufferspeicher, die Präallokation eines Satzes Speichereinheiten eines Speichermediums, welches mit einer Betriebsspannung versorgt wird, zur Speicherung der Echtzeitdaten in einem Dateisystem, wobei das Übertragen der Echtzeitdaten aus dem Ringpufferspeicher auf eine Speichereinheit des Speichermediums nur dann erfolgt, wenn die Betriebsspannung des Speichermediums innerhalb eines vorgegebenen Referenzbereiches liegt.

Weiterhin wird eine medizintechnische Vorrichtung zur Durchführung einer medizinischen Behandlung vorgeschlagen. Die medizintechnische Vorrichtung verfügt über Sensoren, welche zur Aufnahme von Echtzeitdaten eine medizinische Behandlung betreffend eingerichtet sind. Weiterhin verfügt die erfindungsgemäße, medizintechnische Vorrichtung über eine Datenschnittstelle zum Datentransfer der Echtzeitdaten, sowie ein Speichermedium, welches mit einer Betriebsspannung versorgt wird, und über die Datenschnittstelle mit den Echtzeitdaten beschrieben wird. Ein Satz von Speichereinheiten des Speichermediums wird hierbei zur Speicherung der Echtzeitdaten in einem Dateisystem des Speichermediums präallokiert. Die medizinische Vorrichtung verfügt weiterhin über einen Ringpufferspeicher zur temporären Speicherung der Echtzeitdaten, wobei die medizinische Vorrichtung eingerichtet ist die Echtzeitdaten aus dem Ringpufferspeicher zum Speichermedium zu übertragen und auf eine Speichereinheit des Speichermediums zu speichern nur dann, wenn ein gemessener Wert der Betriebsspannung innerhalb eines vorgegebenen Referenzbereiches liegt.

Darüber hinaus wird ein Computerprogramm vorgeschlagen, welches Befehle umfasst, die bei der Ausführung des Programms durch einen Computer diesen veranlassen, die erfindungsgemäßen Verfahren durchzuführen.

Vorgeschlagen wird ebenfalls ein computerlesbarer Datenträger, auf dem das Computerprogramm gespeichert ist.

Die Unteransprüche 2 - 11 betreffen vorteilhafte Ausführungsformen des vorgeschlagenen Verfahrens. Der Unteranspruch 13 betrifft eine vorteilhafte Ausführungsform der medizintechnischen Vorrichtung.

### Kurzbeschreibung der Zeichnungen

Die **Fig. 1** zeigt schematisch eine erfindungsgemäße Ausführungsform der medizintechnischen Vorrichtung.
Die **Fig. 2** zeigt schematisch eine Ausführungsform des erfindungsgemäßen Verfahrens.
Die **Fig. 3A** zeigt schematisch eine Ausführungsform eines erfindungsgemäßen Ringpufferspeichers.
Die **Fig. 3B** zeigt eine schematische Detailansicht eines einzelnen erfindungsgemäßen Elementes einer vorgeschlagenen Datenstruktur.
Die **Fig. 4** zeigt schematisch eine Ausführungsform einer erfindungsgemäßen Speicherblockstruktur.

### Detaillierte Beschreibung der Ausführungsbeispiele

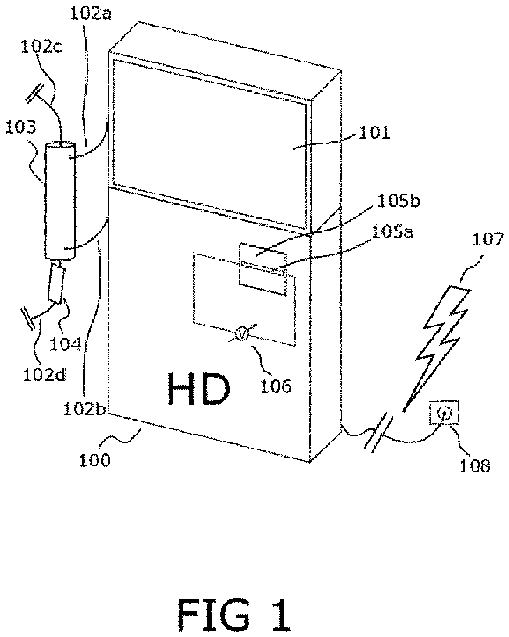

Fig. 1 zeigt eine als Hämodialysegerät (HD) 100 ausgeführte erfindungsgemäße medizintechnische Vorrichtung. Weitere Ausführungsformen der medizintechnischen Vorrichtung können Hämofiltrationsgeräte, Hämodiafiltrationsgeräte, Peritonealdialysegeräte, Apheresegeräte oder Plasmapheresegeräte umfassen. Generell sind alle medizintechnischen Vorrichtungen, bei denen im Betrieb Echtzeitdaten generiert und abgespeichert werden, medizintechnischen Vorrichtungen im Sinne der vorliegenden Erfindung.

Echtzeitdaten können hierbei alle Daten umfassen, die unmittelbar aus Betriebswerten sowie Patientenwerten ohne eine Transformation oder auf Basis einer mathematischen Vorschrift, beispielsweise unter Verwendung eines gespeicherten Algorithmus generiert werden. Das Hämodialysegerät kann weiterhin über eine Benutzerschnittstelle wie beispielsweise einen Touchscreen 101 verfügen. Weitere mögliche Ausführungsformen können alle im Stand der Technik bekannten Benutzerschnittstellen umfassen, welche eine Interaktion zwischen einem Nutzer und einem elektronischen Gerät erlauben.

Das Dialysegerät Fig. 1 verfügt weiterhin über vereinfacht dargestellte Schlauchleitungen 102a - 102d zum getrennten Fluidtransport von Blut 102c, 102d und Dialysierflüssigkeit 102a, 102b, die in einem Dialysefilter 103 über eine semipermeable Membran miteinander in Kontakt gebracht werden. Ein Dialysegerät verfügt in der Regel zudem über eine Vielzahl von Sensoren, z. B. über Ultraschall- bzw. optische Sensoren 104, beispielsweise um Lufteinschlüsse in den Fluidleitungen zu detektieren. Weitere mögliche Sensoren können Drucksensoren, Temperatursensoren oder Spannungssensoren umfassen.

Andere mögliche Sensoren können die Aktivität sowie Einstellungen verbauter Aktuatoren bestimmen. Weitere mögliche Sensoren können Werte bzw. Parameter messen, die aufgrund der internen Kommunikation der einzelnen Komponenten der medizintechnischen Vorrichtung generiert werden. Diese können Statuswerte einzelner Komponenten wie beispielsweise Pumpen, Prozessoren, Speichermedien, Ein- bzw. Ausgabegeräte oder die Sensoren der medizintechnischen Vorrichtung umfassen. Statuswerte sind hierbei alle gemessenen Werte, welche Aktivität und/oder die korrekte Funktionalität der Komponenten betreffen. Ein Beispiel eines solchen Statuswertes ist ein akustisches, optisches, elektrisches, magnetisches oder elektromagnetisches Signal, welches die Aktivität der Komponenten einer Steuervorrichtung der medizintechnischen Vorrichtung signalisiert. Weitere Beispiele für Statuswerte können Betriebstemperaturen oder Betriebsspannung einzelner Komponenten der medizintechnischen Vorrichtung sein.

Das Überwachen der Statuswerte ist notwendig, um sicherzustellen, dass die medizintechnische Vorrichtung sowie deren einzelne Komponenten innerhalb vorab festgelegter Betriebswerte, z. B. innerhalb festgelegter Spannungs-, Druck- oder Temperaturwerte betrieben werden. Andererseits kann hierdurch festgestellt werden, ob kritische Abweichungen vorliegen, die einer unmittelbaren Reaktion bedürfen. Beispiele für eine Reaktion sind das Versetzen der medizintechnischen Vorrichtung in einen sicheren Zustand, die Anzeige eines Alarms, einer Warnung oder die automatische bzw. manuelle Korrektur seitens des medizinischen Personals oder eines Servicetechnikers.

Fig. 1 zeigt weiterhin eine mögliche Ausführungsform eines Speichermediums in Form einer Secure Digital Memory Card (SD-Karte) 105a in Kombination mit einem SD-Karten Schreib-Lesegerät 105b, welches eingerichtet ist, Echtzeitdaten eine medizinische Behandlung betreffend auf der SD-Karte zu speichern. Weitere mögliche Ausführungsformen des Speichermediums können interne oder externe Festplattenlaufwerke, z. B. Magnet- oder Festkörperspeicher sowie beschreibbare optische Datenträger, z. B. Compact Discs, Digital Versatile Discs (DVDs) oder Bluray Discs in Kombination mit einem jeweils hierfür eingerichteten Schreib-Lesegerät umfassen. Speichermedien können weiterhin alle Formen von Halbleiterspeichern, sowie elektrische oder magnetische Datenspeicher in Kombination mit hierfür eingerichteten Lese-Schreibgeräten sein.

Weiterhin wird in Fig. 1 schematisch dargestellt, dass die Betriebsspannung des SD-Karten Schreib-Lesegerätes 105b durch ein Spannungsmessgerät 106 gemessen wird. In einer Ausführungsform kann das Speichermedium alternativ oder zusätzlich selbst über ein intern verbautes Spannungsmessgerät, beispielsweise unter Verwendung eines AD Wandlers, zur Messung der Betriebsspannung verfügen, welches diese misst und über eine Schnittstelle des Speichermediums die Werte an eine Steuervorrichtung (nicht in Figur 1 gezeigt) senden kann.

Erfindungsgemäß ist die Steuervorrichtung dazu eingerichtet, die gemessene Betriebsspannung einzulesen und mit einem vorab definierten Referenzbereich zu vergleichen. Wenn die Steuervorrichtung feststellt, dass die gemessene Betriebsspannung innerhalb des Referenzbereiches liegt, werden die Echtzeitdaten auf eine Speichereinheit des Speichermediums gespeichert. Unter einer Speichereinheit kann hierbei ein Sektor auf einem Speichermedium oder ein elementarer Datenbereich z. B. eine Speicherzelle auf dem erfindungsgemäßen Ringpufferspeicher verstanden werden. Unter einem Sektor ist hierbei eine vorgegebene Anzahl an Bits oder Bytes auf dem Speichermedium zu verstehen, welche durch die dem Speichermedium zugrunde liegende Formatierung durch ein Dateisystem bzw. der physikalischen Architektur des Speichermediums definiert werden kann.

Der Ringpufferspeicher weist eine zyklische Struktur auf, sodass beim Erreichen der letzten Speichereinheit des Ringpufferspeichers, wieder auf die erste Speichereinheit des Ringpufferspeichers zugegriffen wird, sodass dieser kontinuierlich überschrieben wird. Dies kann beispielsweise durch Verwendung einer Speicherreferenz in Form eines Zeigers bzw. Indexes erreicht werden.

Beispiele für bekannte Formatierungen durch ein Dateisystem von Speichermedien, welche vorab z. B. durch ein Betriebssystem der medizintechnischen Vorrichtung festgelegt werden können, sind File Allocation Table (FAT), extended File Allocation Table (exFAT) oder New Technology File System (NTFS). Ein Speichermedium verfügt zudem über physikalische Sektoren, die auf Basis der physikalischen Architektur des Speichermediums definiert sind und in der Regel über eine physikalische Sektorennummer eindeutig adressiert bzw. auf dem Speichermedium lokalisiert werden können. Beispiele für bekannte Adressierungsverfahren physikalischer Sektoren umfassen Zylinder-Kopf-Sektor-Adressierung oder Logische Blockadressierung.

Erfindungsgemäß werden die Echtzeitdaten aus dem Ringpufferspeicher zum Speichermedium nur dann übertragen, wenn die Betriebsspannung des Speichermediums innerhalb eines vorgegebenen Referenzbereiches liegt. Sollte das Spannungsmessgerät 106 eine Betriebsspannung außerhalb eines Referenzbereiches messen, z. B. in Folge von Schwankungen der Netzspannung oder eines Stromausfalls, kann das Schreiben der Echtzeitdaten auf eine Speichereinheit des Speichermediums beispielsweise unterbrochen bzw. verhindert werden. Durch das Blitzsymbol 107 in Figur 1 wird ein Stromausfall als ein mögliches Beispiel eines unvorhergesehenen Ereignisses symbolisiert, wobei das Hämodialysegerät kurzfristig und ohne Vorwarnung von der Versorgung mit elektrischer Energie getrennt wird. In diesem Fall misst das Spannungsmessgerät 106 einen Betriebsspannungswert, der außerhalb des Referenzbereiches liegt, z. B. unterhalb eines kritischen Betriebsspannungswert, woraufhin ein weiteres Übertragen bzw. Schreiben der Echtzeitdaten auf das Speichermedium durch die Steuervorrichtung verhindert wird.

Ein weiteres Beispiel eines unvorhergesehenen Ereignisses betrifft eine Spannungschwankungen der Netzspannung, infolgedessen die Betriebsspannung außerhalb des Referenzbereiches liegen kann. Das Spannungsmessgerät 106 bzw. die Steuervorrichtung selbst können in solchen Fällen über eine sekundäre Energiequelle mit elektrischer Energie versorgt werden. Sekundäre Energiequellen sind beispielsweise Kondensatoren und/oder Batterien.

Ein Übertragen der Echtzeitdaten vom Ringpufferspeicher auf das Speichermedium und das Schreiben der Echtzeitdaten auf die nächste Speichereinheit nur dann, wenn die gemessene Betriebsspannung innerhalb eines Referenzbereiches liegt, bietet den Vorteil, dass die Erzeugung unvollständig oder fehlerhaft beschriebener Speichereinheiten verhindert wird, sodass die Wahrscheinlichkeit eines Datenverlustes reduziert ist.

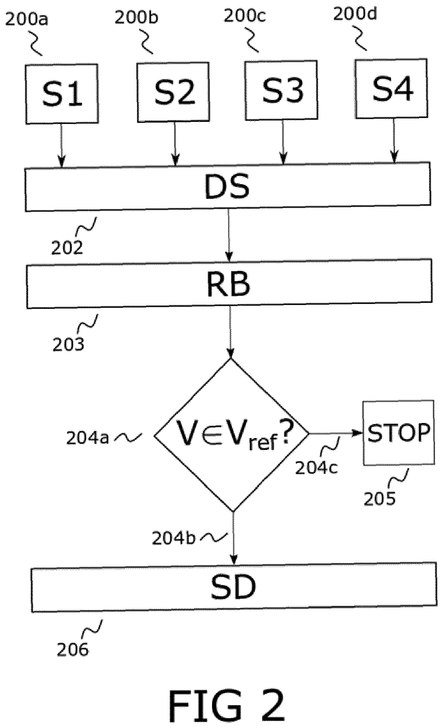

Fig. 2 zeigt schematisch das erfindungsgemäße Verfahren zur ausfallsicheren Speicherung von Echtzeitdaten. Die Sensoren 200a - 200d der medizintechnischen Vorrichtung erfassen eine Vielzahl von Betriebsparametern bzw. Patientenwerten, um hieraus Echtzeitdaten zu erzeugen. Dies kann unter Verwendung von integrierten Schaltungen innerhalb der Sensorkomponenten bzw. zu späteren Zeitpunkten von einer Steuervorrichtung, z. B. einem Prozessor, durchgeführt werden.

Über eine Datenschnittstelle 202 werden die Echtzeitdaten zunächst temporär auf einen Ringpufferspeicher 203 gespeichert, bevor diese auf das Speichermediums 206 gespeichert werden. Bei der Datenschnittstelle 202 kann es sich um kabellose bzw. kabelgebundene Hardwareschnittstellen sowie einer Kombination hiervon handeln. Beispiele für Hardwareschnittstellen sind Peripheral Component Interconnect (PCI-Bus), Accelerated Graphics Port (AGP), Small Computer System Interface (SCSI), Universal Serial Bus (USB), Bluetooth oder WiFi. Weitere Datenschnittstellen 202 können Softwareschnittstellen umfassen, die zur Interprozesskommunikation oder für einzelne Programmkomponenten eingerichtet sind. Die Sensoren 200a - 200d können auch über kabellose Datenschnittstellen mit dem Ringpufferspeicher 203, dem Speichermedium 206 sowie der restlichen medizintechnischen Vorrichtung 100 kommunizieren.

Der Ringpufferspeicher als Datenstruktur kann im Hauptspeicher der medizintechnischen Vorrichtung oder in einem Speicher eines mit der medizintechnischen Vorrichtung in Kommunikation stehenden Datenverarbeitungsgerätes, z. B. einem externen Computer erzeugt werden. Durch Verwendung eines Ringpufferspeichers können insbesondere Echtzeitdaten protokolliert werden, die aufgrund von parallelen Lese-Schreibzugriffen auf das Speichermedium 206 nicht von diesem erfasst werden würden. Auf die Speichereinheiten des Ringpufferspeichers 203 wird hierfür in einer vorab festgelegten Reihenfolge zugegriffen, um die Echtzeitdaten nacheinander auf das Speichermedium 206 zu übertragen. Die Reihenfolge kann hier beispielsweise durch einen Index der einzelnen Speichereinheiten auf dem Ringpufferspeicher festgelegt werden.

Die medizintechnische Vorrichtung verfügt weiterhin über eine Steuervorrichtung 204a, die das Schreiben der Echtzeitdaten vom Ringpufferspeicher 203 auf das Speichermedium 206 veranlasst, sofern die Betriebsspannung V innerhalb eines Referenzbereiches Vref liegt. Weiterhin kann das Übertragen bzw. Schreiben der Echtzeitdaten vom Ringpufferspeicher 203 auf das Speichermedium 206 temporär unterbrochen oder vollständig gestoppt 204c/205 werden, wenn die Betriebsspannung V außerhalb des Referenzbereiches Vref liegt.

Der für die Echtzeitdaten benötigte Speicherbereich auf dem Speichermedium 206 oder auf dem Ringpufferspeicher 203 ist erfindungsgemäß präallokiert. Unter einer Präallokation wird in diesem Zusammenhang eine Reservierung bzw. Bereitstellung einer vorab festgelegten Anzahl bzw. eines Bereichs von Sektoren bzw. Speicheradressen auf einem Speichermedium verstanden. Bei der erfindungsgemäßen Präallokation wird dies bereits vor dem laufenden Betrieb, d. h. vor Aufnahme der Echtzeitdaten, veranlasst. Besonders vorteilhaft ist hierbei eine Präallokation bei Verwendung von Speichermedien mit hierarchischen Dateisystemen wie beispielsweise FAT. Bei hierarchischen Dateisystemen muss bei jedem Schreibvorgang auf zwei Sektoren des Speichermediums zugegriffen werden. Im Falle einer Unterbrechung der Spannungsversorgung der medizintechnischen Vorrichtung bzw. des Speichermediums, insbesondere zwischen den Zugriffen auf beide Sektoren, indem beispielsweise eine SD-Karte aus einem Lese-Schreibgerät der medizintechnischen Vorrichtung während eines Datenzugriffs auf die SD-Karte entfernt wird, kann die Integrität sowie Verfügbarkeit des Dateisystems auf dem Speichermedium und somit der Echtzeitdaten gefährdet sein. Durch die erfindungsgemäßen Verfahren und Vorrichtung sind jedoch sowohl Integrität als auch Verfügbarkeit sichergestellt.

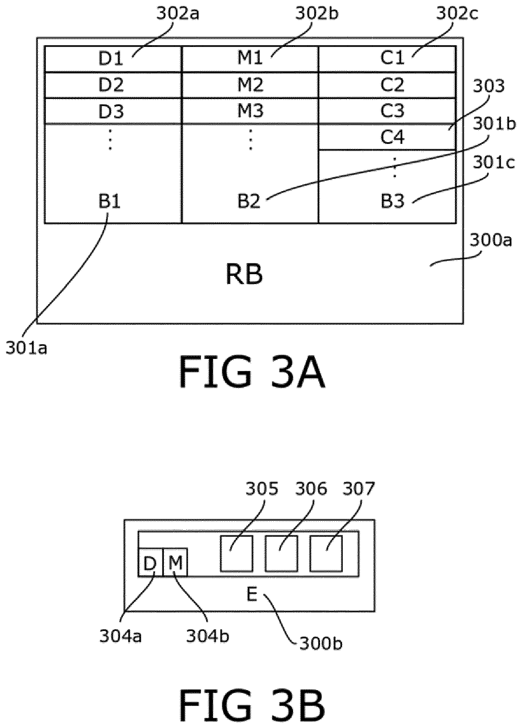

Fig. 3a und 3b zeigen weitere Ausführungsformen des Ringpufferspeichers 300a und der Datenstruktur der Echtzeitdaten 300b. Hierbei ist der Ringpufferspeicher 300a in mindestens drei Unterpufferspeicher 301a - 301c unterteilt, welche dazu eingerichtet sind Echtzeitdaten temporär zu speichern. Ein Unterpufferspeicher 301a kann hierbei Speichereinheiten für Daten 302a bereitstellen. Ein weiterer Unterpufferspeicher 301b kann Speichereinheiten für Metadaten 302b bezüglich Daten bereitstellen. Ein zusätzlicher Unterpufferspeicher 301c kann Speichereinheiten für Kommandodaten 302c bereitstellen.

Eine Unterteilung des Ringpufferspeichers 300a in eine Vielzahl von Unterpufferspeicher 301a - 301c erlaubt es, die Echtzeitdaten nicht als einzelne unabhängige und aufeinanderfolgende Speichereinheiten, sondern in von den Speichereinheiten unabhängige Abschnitte zu unterteilen, sodass Zugriffszeiten reduziert und die Ressourceneffizienz der medizintechnischen Vorrichtung insgesamt verbessert wird.

Metadaten 302b umfassen Daten, die im Zusammenhang mit dem Speichervorgang der Daten 302a generiert werden können. Beispielsweise umfassen Metadaten zusätzliche Informationen bezüglich des Speicherortes der Daten 302a oder der gegenwärtigen Lese-Schreibposition, indem z. B. eine physikalische Sektorennummer oder einer Sektorennummer eines Dateisystems auf Speichermedium oder Ringpufferspeicher hinterlegt wird. Weiterhin können Metadaten Informationen bezüglich der Bytelänge des vorherigen, gegenwärtigen oder nachfolgenden Elementes der Echtzeitdaten speichern. Ein Element umfasst in diesem Zusammenhang eine vorab festgelegte Datenstruktur, beispielsweise bestehend aus Daten 302a und/oder Daten 302b, welche im Speicherprozess erzeugt wird. Durch die beschriebene redundante Datenspeicherarchitektur wird sichergestellt, dass im Fehlerfall eine Rekonstruktion der Daten 302a sowie die Integrität und Verfügbarkeit der gespeicherten Echtzeitdaten auf dem Speichermedium ermöglicht wird.

Metadaten 302b können weiterhin Abschnittsinformationsdaten und/oder Aufzeichungsinformationsdaten umfassen. Aufzeichungsinformationsdaten bzw. Abschnittsinformationsdaten werden auf hierfür eingerichtete Speichereinheiten auf dem Ringpufferspeicher bzw. dem Speichermedium gespeichert. Aufzeichungsinformationdaten können beispielsweise eine Byte-Anzahl, welche eine Speichereinheit auf dem Speichermedium bildet und/oder eine Anzahl von Speichereinheiten, welche einen Speicherblock bildet, umfassen. Weiterhin können Aufzeichungsinformationdaten Daten bezüglich des Gültigkeitszustand des Datenstroms, die gegenwärtige Schreibposition einer Speichereinheit bzw. eines Speicherblockes auf dem Speichermedium, sowie die aktuelle Datenträgerposition umfassen. Der Gültigkeitszustand umfasst hierbei einen in den Aufzeichnungsdaten hinterlegten Zustand, beispielsweise einen alphanumerischen Indexwert. Der Indexwert definiert, ob die betreffenden Echtzeitdaten dauerhaft gespeichert oder bei einem nächsten Schreibvorgang überschrieben werden können. Die Datenträgerposition umfasst im Falle eines FAT/exFAT Dateisystems die Cluster-Nummer und die Cluster-relative Sektornummer. Unter der gegenwärtigen Schreibposition kann hierbei die Position der zuletzt beschriebenen Speichereinheit der Daten 302a der fortlaufend geschriebenen Speichereinheiten verstanden werden.

Abschnittinformationsdaten können beispielsweise Informationen bereitstellen, ob eine feste Zahl Speichereinheiten bereits gespeichert bzw. übertragen wurden.

Kommandodaten 302c umfassen eine Vielzahl von computerlesbaren Kommandobefehlen, die eingerichtet sind, um eine Vielzahl von Operation auf Basis der Daten 302a, der Metadaten 302b und/oder der Kommandodaten 302c selbst durchzuführen. Beispiele möglicher Operationen umfassen das Übertragen unvollständig oder vollständig mit Daten 302a gefüllter Sektoren vom Ringpufferspeicher 300a auf das Speichermedium, das Übertragen eines mit Metadaten gefüllten Sektors vom Ringpufferspeicher 300a auf das Speichermedium oder das Zurücksetzen des Ringpufferspeichers auf eine vordefinierte Speichereinheit, z. B. auf die erste Datenspeichereinheit D1, Metadatenspeichereinheit M1 oder Kommandospeichereinheit C1.

Die einzelnen Unterpufferspeicher können weiterhin unterschiedliche Größen bezüglich der Zahl in Bytes bzw. der bereitgestellten Speichereinheiten umfassen. Beispielsweise kann der für Kommandodaten bereitgestellte Unterpufferspeicher 301c mehr Speichereinheiten 303 als die Unterpufferspeicher 301a - 301b umfassen, da Kommandodaten 302a Operationen bezüglich der Daten 302a, der Metadaten 302b und/oder der Kommandodaten 302c umfassen können.

In einer weiteren Ausführungsform liegen die Speichereinheiten auf dem Ringpufferspeicher 300a in einer sortierten Reihenfolge vor. Die Reihenfolge kann hierbei über die Kommandodaten 302c oder einen alphanumerischen Wert gegeben sein. In diesem Fall werden beim Lese-Schreibvorgang die Speichereinheiten des Ringpufferspeichers 300a bzw. der Unterpufferspeicher 301a - 301c in einer auf Basis der Identifikationskennung festgelegten Reihenfolge abgearbeitet, wobei die auf das Speichermedium in dieser Reihenfolge gespeicherten Speichereinheiten Daten 302a, Metadaten 302b und Kommandodaten 302c umfassen können.

In einer weiteren Ausführungsform kann das FAT/exFAT Application Programming Interface (API) zur Reduktion der Zugriffszeiten auf die auf dem Speichermedium gespeicherten Echtzeitdaten um Funktionen bzw. Programme erweitert werden. Eine API ist eine Programmierschnittstelle und umfasst einen Programmteil eines Softwaresystems, um eine Datenkommunikation mit anderen Programmen bzw. Softwaresystemen zu ermöglichen. Folgende Funktionen bzw. Programme sind beispielhaft für eine erweiterte FAT/exFAT API:
Bei einem Beispiel werden die physikalische Sektorennummer einer gegenwärtigen Schreib-Leseposition eines Datenspeicherortes auf dem Speichermedium identifiziert und gespeichert, wobei der Datenspeicherort, durch einen Index identifiziert werden kann. Dabei kann es sich bei dem Index um eine zur Identifikation des Datenspeicherortes geeignete, eindeutige, alphanumerische Symbolfolge handeln. Diese Datenspeicherorte können einen Satz Speichereinheiten umfassen, welche Aufzeichungsinformationsdaten bzw. Abschnittsinformationsdaten vorhalten.

Bei einem weiteren Beispiel kann die gegenwärtige Lese-Schreibposition unter Verwendung einer bekannten physikalischen Sektorennummer auf einen Datenspeicherort gesetzt werden, welcher durch einen Index identifiziert werden kann.

Bei einem weiteren Beispiel kann eine physikalische Sektorennummer eines Elementes der Echtzeitdaten in den Metadaten, z. B. Aufzeichungsinformationsdaten bzw. Abschnittsinformationsdaten, des beanspruchten Elementes der zugrundeliegenden Datenstruktur gespeichert werden.

Fig. 3B zeigt eine weitere Ausführungsform der Datenstruktur der Echtzeitdaten, welche als Elemente 300b vorliegen. Ein Element 300b kann dabei aus Daten 304a und Metadaten 304b zusammengesetzt sein. Die Elemente können zudem eine festgelegte Struktur aufweisen, um zeit- und ressourceneffizientes Speichern der Echtzeitdaten bei gleichzeitiger Sicherstellung der Verfügbarkeit und Integrität der gespeicherten Echtzeitdaten sicherzustellen.

In diesem Beispiel weisen die Elemente mindestens eine Elementkennung 305, z. B. eine alphanumerische Symbolfolge, zur Unterscheidung des Elementtyps des vorherigen, gegenwärtigen und/oder nachfolgenden Elementes auf. Zusätzlich oder alternativ umfassen die Elemente, eine Daten-Länge z. B. in Bytes 306 des vorherigen, gegenwärtigen bzw. nachfolgenden Elementes, wobei die Größenangabe mindestens einmal im Element 300b hinterlegt werden kann. Darüber hinaus umfassen die Elemente 300b die aufgezeichneten Echtzeitdaten 307.

Der technische Effekt dieser Datenstruktur erlaubt im Fehlerfall eine Fehlerkorrektur und sichert den Datenstrom gegen Datenverluste durch zufällige Ereignisse ab. Zufällige Ereignisse umfassen insbesondere fehlende Speichereinheiten, z. B. Sektoren, oder einen fehlenden Satz von Speichereinheiten bzw. unbeabsichtigte Modifikationen der Echtzeitdaten durch zufällige Bit Flips, d. h. zufällige und unvorhersehbare Zustandswechsels einzelner Bits. Beispielsweise wird eine Fehlererkennung dadurch ermöglicht, dass die hinterlegte Länge in Bytes im Element mit der tatsächlichen Bytelänge des vorherigen, gegenwärtigen bzw. nachfolgenden Elemente verglichen wird. Sollte eine Abweichung zwischen hinterlegter und gemessener Bytelänge festgestellt wird, ist ein Fehler sehr wahrscheinlich. In diesem Fall können eine Vielzahl an Gegenmaßnahmen zur Wiederherstellung der Integrität und Verfügbarkeit der Daten initiiert werden. Beispielsweise können Fehlerkorrekturen auf Basis der vorhandenen Echtzeitdaten 302a und 302b vorgenommen werden. Darüber hinaus können Nutzer, Hersteller sowie Serviceprovider der medizintechnischen Vorrichtung über den Fehler mittels einer Warnung oder eines Alarms informiert bzw. die medizintechnische Vorrichtung in einen sicheren Zustand überführt werden, um weiteren Datenverlust zu vermeiden.

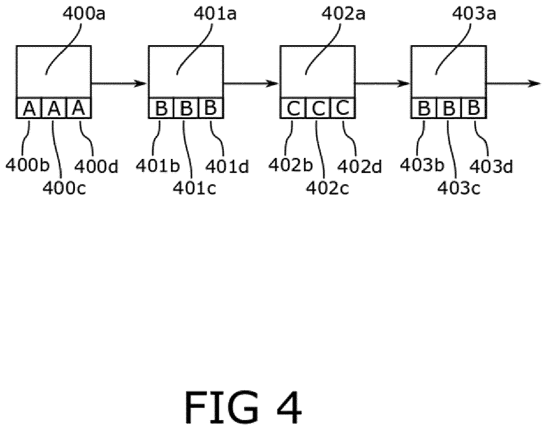

Fig. 4 zeigt schematisch eine weitere Ausführungsform der Datenstruktur der Echtzeitdaten. In diesem Fall sind die Speichereinheiten, welche für die Echtzeitdaten bereitgestellt werden, in Speicherblöcke (400b, 400c, 400d) zusammengesetzt. Bei Speicherblöcken handelt es sich um größere Datenstrukturen auf dem Ringpufferspeicher, einem Unterpufferspeicher oder auf dem Speichermedium, welche aus einer festen Zahl an Speichereinheiten bestehen. Die Zahl der Speichereinheiten, welche einen Speicherblock bilden, kann dabei vor Inbetriebnahme der medizintechnischen Vorrichtung sowie vor, während sowie nach einer Behandlung mit der medizintechnischen Vorrichtung festgelegt werden. Zusätzlich oder alternativ kann dies dynamisch im laufenden Betrieb der Vorrichtung angepasst werden, z. B., falls eine Modifikation oder Erweiterung der aufgezeichneten Echtzeitdaten eine Änderung der Speicherblockgröße erforderlich machen sollte. Eine Änderung der Speicherblockgröße kann hierbei eine Änderung hinsichtlich der Größe in Bytes bzw. der Zahl an Speichereinheiten, welche einen Speicherblock bilden, umfassen.

Bei einer weiteren Ausführungsform können die Speicherblöcke mit einer Speicherblockidentifikationskennung versehen sein, welche unterscheidbare Speicherblockidentifikationszustände aufweisen. In einem Beispiel können die Speicherblockidentifikationszustände alphanumerische Indizes bzw. Symbole umfassen, sodass eine Unterscheidung der Speicherblöcke anhand der Speicherblockidentifikationskennung ermöglicht werden kann.

Fig. 4 zeigt eine weitere Ausführungsform, bei welcher die Speicherblöcke (400b, 401b, 402b) eine Speicherblockidentifikationskennung erhalten, welche aus mindestens drei unterscheidbaren Speicherblockidentifikationszuständen ausgewählt ist, z. B. "A, B, C" oder "A, B, C, D".

Während einer Sequenz (400a, 401a, 402a, 403a) werden alle Speicherblöcke des Ringpufferspeichers oder der Unterpufferspeicher auf das Speichermedium übertragen. Unter einer Sequenz ist hierbei das vollständige Übertragen der Speicherblöcke vom Ringpufferspeicher oder einem der Unterpufferspeicher auf das Speichermedium zu verstehen. Eine neue Sequenz beginnt, sobald der erste Speicherblock auf Ringpufferspeicher oder einem der Unterpufferspeicher erneut überschrieben wird. Dieser Vorgang wiederholt sich fortlaufend, sodass sich eine erste Sequenz (400a) und auf die erste Sequenz folgende weitere Sequenzen (401a, 402a, 403a) ergeben.

Die Speicherblöcke (400b - 400d) innerhalb der ersten Sequenz (400a) weisen einen ersten Speicherblockidentifikationszustand (A) auf, wobei die weiteren Sequenzen (401a, 402a, 403a) dadurch gekennzeichnet sind, dass die Speicherblöcke innerhalb der weiteren Sequenzen (401a, 402a, 403a) jeweils Speicherblockidentifikationszustände (B, C) abweichend von den Speicherblockidentifikationszuständen (A) der Speicherblöcke (400b, 400c, 400d) der ersten Sequenz (400a) aufweisen. Weiterhin unterscheiden sich die Speicherblockidentifikationszustände (B) der Speicherblöcke (401a, 401c, 401d) jeweils von einer Sequenz (401a) der weiteren Sequenzen zu einer nachfolgenden Sequenz (402a). In Figur 4 weisen beispielsweise die Speicherblockzustände der Speicherblöcke der ersten Sequenz 400a den Zustand A auf. Die Speicherblockzustände der Speicherblöcke der zweiten Sequenz 401a weisen den Zustand B auf, wobei die Speicherblöcke der dritten Sequenz jeweils den Speicherblockidentifikationszustand C aufweisen.

Weiterhin bilden die Speicherblockidentifikationszustände der Speicherblöcke der weiteren Sequenzen (401b - 401d, 402b - 402d, 403b - 403d) eine sich wiederholenden Folge von Speicherblockidentifikationszuständen.

Die Figur 4 zeigt hierfür ein Beispiel für einen Ringpufferspeicher bzw. Unterpufferspeicher mit jeweils drei Speicherblöcken. Durch die sich wiederholende Folge von Speicherblockidentifikationszuständen wird nach mehreren Sequenzen die Folge "A A A B B B C C C B B B C C C ..." auf das Speichermedium übertragen und gespeichert. Ersichtlich ist, dass die Speicherblockidentifikationszustände 400b, 400c, 400d der ersten Sequenz 400a von den Speicherblockidentifikationszustände der Speicherblöcke nachfolgenden Sequenzen 401a, 402a, 403a, abweichen. Die Speicherblockidentifikationszustände der Blöcke innerhalb der weiteren Sequenzen 401a, 402a, 403a wiederholen sich fortlaufend.

In einem Beispiel mit vier unterschiedlichen Speicherblockidentifikationszuständen und einem Ringpufferspeicher bzw. Unterpufferspeicher mit lediglich zwei Speicherblöcken, wird so analog nach mehreren Sequenzen die Folge "A A B B C C D D B B C C D D B B ..." auf das Speichermedium übertragen und gespeichert.

Der technische Effekt, der sich aus dem abweichenden ersten Speicherblockidentifikationszustand der Speicherblöcke der zuerst übertragenen Speichersequenz ergibt, ist vorrangig eine signifikant verbesserte Fehlererkennung. Beim erstmaligen Füllen des Ringpufferspeichers bzw. eines der Unterpufferspeicher liegt der abweichende erste Speicherblockidentifikationszustand für jeden Speicherblock innerhalb der Speichersequenz nur in einfacher Ausführung vor. Infolgedessen ist bei einem fehlerfreien Schreibvorgang der Echtzeitdaten auf das Speichermedium davon auszugehen, dass der abweichende Zustand lediglich in der ersten Speichersequenz auf dem Speichermedium vorzufinden ist, da Ringpufferspeicher bzw. Unterpufferspeicher kontinuierlich überschrieben werden. Im Fehlerfall, z. B. bei kurzzeitigen Unterbrechungen der Spannungsversorgung, wird hingegen der erste Speicherblockidentifikationszustand in weiteren Speichersequenzen auf dem Speichermedium identifiziert.

Zusätzlich oder alternativ können die Daten auf dem Ringpufferspeicher bzw. dem Unterpufferspeicher überwacht werden, sodass beispielsweise bei wiederholter Identifikation des ersten Speicherblockidentifikationszustandes Aktionen initiiert werden können, um weitere Datenverluste zu verhindern. Beispiele hierfür umfassen Warnmeldungen an Nutzer, Servicetechniker, Hersteller und/oder ein temporärer Abbruch einer Behandlung bzw. das Versetzen der medizintechnischen Vorrichtung in einen sicheren Zustand.

Bei einer weiteren Ausführungsform können die Echtzeitdaten sektorweise verschlüsselt und/oder authentifiziert werden, um sensible Daten, z. B. Patientendaten, vor Zugriffen unbefugter Dritter zu schützen. Beispiele für Verschlüsslungstechniken zur Verschlüsselung von Echtzeitdaten sind, z. B. Advanced Encryption Standard (AES) oder Rivest-Shamir-Adleman (RSA).

Die Echtzeitdaten können ferner authentifiziert werden, um diese eindeutig einer medizintechnischen Vorrichtung, einem Patienten bzw. einer medizinischen Behandlung zuzuordnen, und um eine Manipulation der Echtzeitdaten zu verhindern. Beispielsweise könnte ein Speichermedium aus einer ersten medizintechnischen Vorrichtung entfernt und mit einer zweiten medizintechnischen Vorrichtung verbunden werden. Die von der zweiten medizintechnischen Vorrichtung generierten Echtzeitdaten würden dann anschließend fälschlicherweise der ersten medizintechnischen Vorrichtung zugeordnet werden. Aus dem Stand der Technik sind hierfür kryptografische Nonces bekannt. Bei einer Nonce handelt es sich in der Kryptografie um alphanumerische Werte, z. B. Zählerstände, Systemzeiten oder Funktionen hiervon, die nur einmalig Verwendung finden dürfen. Auf Basis einer beliebigen Kombination aus Gerätenummer, Nutzernamen, Passwort bzw. Nonce sowie unter Verwendung einer mathematischen Vorschrift kann eine Prüfsumme generiert und mit den Echtzeitdaten gespeichert werden. Aufgrund der Verwendung einer Nonce ist jede Prüfsumme unterschiedlich, sodass eine einfache Kopie bereits verwendeter Prüfsummen zum Zwecke einer Authentifizierung unzureichend ist. Hiermit lassen sich beispielsweise Daten eindeutig autorisierten Personen bzw. Vorrichtungen zuordnen, da nur diese in der Regel Kenntnis aller initialer Eingabewerte haben.

Bei einer Ausführungsform kann in den Speichereinheiten des Dateisystems auf Ringpufferspeicher, Unterpufferspeicher bzw. Speichermedium, welche die Echtzeitdaten vorhalten, ein Speicherbereich für Authentifizierungsdaten bereitgestellt werden. Unter einem Speicherbereich ist hierbei eine Zahl an Bytes zu verstehen, um welche eine Speichereinheit eines Dateisystems, z. B. ein Sektor, um eine festgelegte Zahl an Bytes reduziert ist. Authentifizierungsdaten können dabei beispielsweise eine nicht-fälschbare Prüfsumme umfassen, die aus den verschlüsselten und/oder unverschlüsselten Echtzeitdaten, welche von reduzierten Speichereinheiten vorgehalten werden, unter Verwendung bekannter Authentifizierungsalgorithmen generiert werden. Beispiele solcher Authentifizierungsalgorithmen sind Verfahren auf Basis von Secure Hash Algorithm 3 (SHA-3) oder BLAKE, siehe z. B. Aumasson, Jean-Philippe (2021), Crypto Dictionary: 500 Tasty Tidbits for the Curious Cryptographer.

In einem Beispiel werden zunächst die Echtzeitdaten, welche auf der reduzierten Speichereinheit vorgehalten werden, verschlüsselt und zusammen mit den Authentifizierungsdaten auf Ringpufferspeicher, Unterpufferspeicher bzw. das Speichermedium geschrieben. Die Authentifizierungsdaten werden hierbei aus den verschlüsselten und/oder unverschlüsselten Echtzeitdaten unter Verwendung eines Authentifizierungsalgorithmus generiert. Speichereinheiten, die einen Speicherbereich für Authentifizierungsdaten und einen verkürzten Speicherbereich für Echtzeitdaten bereitstellen, können dann auf Ringpufferspeicher, Unterpufferspeicher und/oder dem Speichermedium gespeichert werden. Bei Kenntnis des kryptografischen Schlüssels, des Authentifizierungsalgorithmus sowie zusätzlicher Werte wie der verwendeten Nonce, ist eine Generierung bzw. Reproduktion von Authentifizierungsdaten, z. B. der Prüfsumme, möglich. Anhand dieser Prüfsumme können einzelne Speichereinheiten fälschungssicher und eindeutig einer medizintechnischen Vorrichtung, einer medizinischen Behandlung bzw. einem Nutzer zugeordnet werden. Dies wird ermöglicht, indem aus den in den Sektoren hinterlegten Echtzeitdaten, der spezifischen Nonce sowie der Kenntnis des verwendeten kryptografischen Verfahrens, die Authentifizierungsdaten, z. B. die Prüfsumme, reproduziert und mit den in der Speichereinheit hinterlegten Authentifizierungsdaten verglichen wird.

Sollte eine Prüfung der Authentifizierungsdaten ergeben, dass auf einem Speichermedium hinterlegte Echtzeitdaten von einer anderen medizintechnischen Vorrichtung generiert worden sind, können verschiedene Aktionen als unmittelbare Folge initiiert werden. Zum Beispiel kann ein Alarm ausgelöst, eine Warnmeldung auf einem Ausgabegerät angezeigt oder der Hersteller des medizintechnischen Gerätes bzw. ein Servicetechniker informiert werden. Alternativ oder zusätzlich kann das medizintechnische Gerät in einen sicheren Zustand überführt werden. Geeignete Mittel für einen Datentransfer zwischen medizintechnischer Vorrichtung und einem externen Kommunikationspartner, wie z. B. einem Servicetechniker, sind aus dem Stand der Technik bekannt. Bevorzugte Kommunikationsmittel können beispielsweise Mobilfunk, WiFi oder Ethernet umfassen.

Die Verschlüsslung und Authentifizierung einzelner Speichereinheiten stellt sicher, dass selbst im Fall unvorhergesehener Ereignisse, z. B. im Fall von Stromausfällen, sowohl Verfügbarkeit, Authentizität bzw. Verschlüsslung der Echtzeitdaten gewährleistet ist.

Die erfindungsgemäßen Verfahren können ebenfalls von einer unabhängigen separaten Vorrichtung durchgeführt werden. Eine derartige separate Vorrichtung umfasst eine Datenschnittstelle zum Übertragen bzw. Auslesen der Sensordaten von einer weiteren Vorrichtung, beispielsweise Medizintechnische Vorrichtung wie oben beschrieben, eine Datenschnittstelle zum Übertragen der Sensordaten auf ein Speichermedium und einen Prozessor, wobei der Prozessor dazu eingerichtet ist, zumindest eines der erfindungsgemäßen Verfahren auszuführen.

## Patentansprüche

1. Verfahren zur ausfallsicheren Speicherung von Echtzeitdaten eine medizinische Behandlung betreffend, umfassend:
Temporäres Speichern der Echtzeitdaten in einen Ringpufferspeicher (203), Präallokation eines Satzes von Speichereinheiten eines Speichermediums (206), welches mit einer Betriebsspannung versorgt wird, zur Speicherung der Echtzeitdaten in einem Dateisystem,
Übertragen der Echtzeitdaten aus dem Ringpufferspeicher (203) zum Speichermedium (206) und Speichern der Echtzeitdaten auf einer Speichereinheit des Speichermediums nur dann, wenn die Betriebsspannung des Speichermediums innerhalb eines vorgegebenen Referenzbereiches (204a) liegt.

2. Verfahren nach Anspruch 1, wobei das Dateisystem als File Allocation Table (FAT), extended File Allocation Table (exFAT) oder New Technology File System (NTFS) formatiert ist.

3. Verfahren nach Anspruch 1 oder 2, wobei die Speichereinheiten des Ringpufferspeicher, welche die Echtzeitdaten vorhalten, mit einer sortierbaren Identifikationskennung versehen werden und/oder die Speichereinheiten in sortierter Reihenfolge auf das Speichermedium übertragen werden.

4. Verfahren nach einem der vorhergehenden Ansprüche, wobei die Echtzeitdaten Metadaten (304b) beinhalten.

5. Verfahren nach Anspruch 4, wobei die Metadaten ausgewählt werden aus der Gruppe von Aufzeichungsinformationsdaten oder Abschnittsinformationsdaten, und/oder wobei die Metadaten eine physikalische Sektorennummer beinhalten.

6. Verfahren nach einem der vorhergehenden Ansprüche, wobei die Echtzeitdaten aus einzelnen Elementen (300b) zusammengesetzt werden und wobei die Elemente eine Elementenkennung, die Daten-Länge des aktuellen Elementes und/oder die in Verbindung mit der medizinischen Behandlung aufgenommenen Daten enthalten.

7. Verfahren nach einem der vorhergehenden Ansprüche, wobei der Ringpufferspeicher (300a) in mehrere Unterpufferspeicher (301a, 301b, 301c) aufgeteilt wird.

8. Verfahren nach Anspruch 7, wobei mindestens ein Unterpufferspeicher Speichereinheiten für Daten eine medizinische Behandlung (302a) betreffend bereitstellt, und ein Unterpufferspeicher Speichereinheiten für Metadaten (302b) bereitstellt, und ein Unterpufferspeicher Speichereinheiten für Kommandodaten (302c) bereitstellt,
oder wobei mindestens ein Unterpufferspeicher Speichereinheiten für Daten eine medizinische Behandlung betreffend bereitstellt und ein Unterpufferspeicher Speichereinheiten für Metadaten bereitstellt und ein Unterpufferspeicher Speichereinheiten für Kommandodaten bereitstellt, und wobei jeweils Speichereinheiten des Unterpufferspeichers für Daten eine medizinische Behandlung betreffend zusammen mit Speichereinheiten des Unterpufferspeichers für Kommandodaten,
und/oder jeweils Speichereinheiten des Unterpufferspeichers für Metadaten zusammen mit Sektoren des Unterpufferspeichers für Kommandodaten temporär gespeichert werden.

9. Verfahren nach einem der vorhergehenden Ansprüche, wobei die Speichereinheiten, welche die Echtzeitdaten vorhalten, jeweils verschlüsselt und/oder authentifiziert werden,
und/oder wobei mindestens jeweils ein Speicherbereich einer Speichereinheit, welche Echtzeitdaten vorhält, für Authentifizierungsdaten bereitgestellt wird.

10. Verfahren nach einem der vorhergehenden Ansprüche, wobei der Ringpufferspeicher, die Unterpufferspeicher und/oder das Speichermedium in Speicherblöcke (400b, 400c, 400d) unterteilt werden, welche jeweils aus einer festen Zahl von Speichereinheiten zusammengesetzt werden.

11. Verfahren nach Anspruch 10, wobei die Speicherblöcke (400b, 400c, 400d) eine Speicherblockidentifikationskennung erhalten, welche aus mindestens drei unterscheidbaren Speicherblockidentifikationszuständen (A, B, C) ausgewählt ist,
wobei alle Speicherblöcke des Ringpufferspeichers (203) oder der Unterpufferspeicher während einer Sequenz (400a, 401a, 402a, 403a) auf das Speichermedium (206) übertragen werden und wobei sich dieser Vorgang fortlaufend wiederholt, so dass sich eine erste Sequenz (400a) ergibt und auf die erste Sequenz folgende weitere Sequenzen (401a, 402a, 403a),
wobei die Speicherblöcke (400b, 400c, 400d) innerhalb der ersten Sequenz (400a) einen ersten Speicherblockidentifikationszustand (A) aufweisen,
wobei die weiteren Sequenzen (401a, 402a, 403a) **dadurch gekennzeichnet sind, dass** die Speicherblöcke innerhalb der weiteren Sequenzen jeweils Speicherblockidentifikationszustände (B, C) abweichend von den Speicherblockidentifikationszuständen (A) der Speicherblöcke der ersten Sequenz (400a) aufweisen,
wobei sich die Speicherblockidentifikationszustände der Speicherblöcke jeweils von einer Sequenz (401a) der weiteren Sequenzen zu einer nachfolgenden Sequenz (402a) unterscheiden,
wobei die Speicherblockidentifikationszustände der Speicherblöcke (401b - 401d, 402b - 402d, 403b - 403d) der weiteren Sequenzen (401a, 402a, 403a) eine sich wiederholenden Folge von Speicherblockidentifikationszuständen bilden.

12. Medizintechnische Vorrichtung (100) zur Durchführung einer medizinischen Behandlung, umfassend:
Sensoren (200a, 200b, 200c, 200d) zur Aufnahme von Echtzeitdaten, die medizinische Behandlung betreffend,
eine Datenschnittstelle (202) zum Datentransfer der Echtzeitdaten,
ein Speichermedium (206), welches mit einer Betriebsspannung versorgt wird, und über die Datenschnittstelle (202) mit den Echtzeitdaten beschrieben wird,
wobei ein Satz von Speichereinheiten des Speichermediums zur Speicherung der Echtzeitdaten in einem Dateisystem des Speichermediums präallokiert ist,
einen Ringpufferspeicher (203), zur temporären Speicherung der Echtzeitdaten
wobei die medizinische Vorrichtung (100) eingerichtet ist die Echtzeitdaten aus dem Ringpufferspeicher (203) zum Speichermedium (206) zu übertragen und auf eine Speichereinheit des Speichermediums zu speichern nur dann, wenn ein gemessener Wert der Betriebsspannung innerhalb eines vorgegebenen Referenzbereiches (204a) liegt.

13. Medizintechnische Vorrichtung nach Anspruch 12, eingerichtet zur: Hämodialyse, Hämofiltration, Hämodiafiltration, Peritonealdialyse, Apherese oder Plasmapherese.

14. Computerprogramm, umfassend Befehle, die bei der Ausführung des Programms durch einen Computer diesen veranlassen, das Verfahren nach einem der Ansprüche 1-11 auszuführen.

15. Computerlesbarer Datenträger, auf dem das Computerprogramm nach Anspruch 14 gespeichert ist.

## Claims

1. Method for the failsafe storage of real-time data relating to a medical treatment, comprising:
temporarily storing the real-time data in a ring buffer memory (203),
pre-allocating a set of storage units of a storage medium (206), which is supplied with an operating voltage, for storing the real-time data in a file system,
transferring the real-time data from the ring buffer memory (203) to the storage medium (206) and storing the real-time data on a storage unit of the storage medium only if the operating voltage of the storage medium is within a predefined reference range (204a).

2. Method according to Claim 1, wherein the file system is formatted as a file allocation table (FAT), extended file allocation table (exFAT), or new technology file system (NTFS).

3. Method according to Claim 1 or 2, wherein the storage units of the ring buffer memory which retain the real-time data are provided with a sortable identification code and/or the storage units are transferred in sorted sequence onto the storage medium.

4. Method according to any one of the preceding claims, wherein the real-time data contain metadata (304b).

5. Method according to Claim 4, wherein the metadata are selected from the group of recording information data or section information data, and/or wherein the metadata contain a physical sector number.

6. Method according to any one of the preceding claims, wherein the real-time data are composed of individual elements (300b) and wherein the elements contain an element code, the data length of the current element, and/or the data recorded in conjunction with the medical treatment.

7. Method according to any one of the preceding claims, wherein the ring buffer memory (300a) is divided into multiple sub-buffer memories (301a, 301b, 301c).

8. Method according to Claim 7, wherein at least one sub-buffer memory provides storage units for data relating to a medical treatment (302a), and one sub-buffer memory provides storage units for metadata (302b), and one sub-buffer memory provides storage units for command data (302c),
or wherein at least one sub-buffer memory provides storage units for data relating to a medical treatment and one sub-buffer memory provides storage units for metadata and one sub-buffer memory provides storage units for command data, and wherein in each case storage units of the sub-buffer memory for data relating to a medical treatment are temporarily stored together with storage units of the sub-buffer memory for command data,
and/or in each case storage units of the sub-buffer memory for metadata are temporarily stored together with sectors of the sub-buffer memory for command data.

9. Method according to any one of the preceding claims, wherein the storage units which retain the real-time data are each encrypted and/or authenticated,
and/or wherein at least one storage area of a storage unit which retains real-time data is provided for authentication data in each case.

10. Method according to any one of the preceding claims, wherein the ring buffer memory, the sub-buffer memory, and/or the storage medium are subdivided into storage blocks (400b, 400c, 400d), which are each composed of a fixed number of storage units.

11. Method according to Claim 10, wherein the storage blocks (400b, 400c, 400d) receive a storage block identification code, which is selected from at least three differentiable storage block identification statuses (A, B, C),
wherein all storage blocks of the ring buffer memory (203) or the sub-buffer memories are transferred during a sequence (400a, 401a, 402a, 403a) to the storage medium (206) and wherein this process repeats progressively, so that a first sequence (400a) results and further sequences (401a, 402a, 403a) following the first sequence,
wherein the storage blocks (400b, 400c, 400d) within the first sequence (400a) have a first storage block identification status (A),
wherein the further sequences (401a, 402a, 403a) are **characterized in that** the storage blocks within the further sequences each have storage block identification statuses (B, C) deviating from the storage block identification statuses (A) of the storage blocks of the first sequence (400a),
wherein the storage block identification statuses of the storage blocks of respectively one sequence (401a) of the further sequences each differ from a following sequence (402a),
wherein the storage block identification statuses of the storage blocks (401b - 401d, 402b - 402d, 403b - 403d) of the further sequences (401a, 402a, 403a) form a repeating sequence of storage block identification statuses.

12. Medical technology device (100) for carrying out a medical treatment, comprising:
sensors (200a, 200b, 200c, 200d) for recording real-time data relating to the medical treatment, a data interface (202) for data transfer of the real-time data,
a storage medium (206), which is supplied with an operating voltage, and is written with the real-time data via the data interface (202),
wherein a set of storage units of the storage medium is pre-allocated for storing the real-time data in a file system of the storage medium,
a ring buffer memory (203) for temporarily storing the real-time data,
wherein the medical device (100) is configured to transfer the real-time data from the ring buffer memory (203) to the storage medium (206) and to store these data on a storage unit of the storage medium only when a measured value of the operating voltage is within a predefined reference range (204a).

13. Medical technology device according to Claim 12, configured for: hemodialysis, hemofiltration, hemodiafiltration, peritoneal dialysis, apheresis, or plasmapheresis.

14. Computer program, comprising commands which, upon the execution of the program by a computer, prompt it to carry out the method according to any one of Claims 1-11.

15. Computer-readable data carrier, on which the computer program according to Claim 14 is stored.

## Revendications

1. Procédé de stockage sécurisé de données en temps réel relatives à un traitement médical, ledit procédé comprenant les étapes suivantes :
stocker temporairement les données en temps réel dans une mémoire tampon en anneau (203),
pré-allouer un ensemble d'unités de stockage d'un support de stockage (206), qui est alimenté en tension de fonctionnement, afin de stocker les données en temps réel dans un système de fichiers,
transférer les données en temps réel de la mémoire tampon en anneau (203) au support de stockage (206) et stocker les données en temps réel sur une unité de stockage du support de stockage uniquement si la tension de fonctionnement du support de stockage est située dans une zone de référence spécifiée (204a).

2. Procédé selon la revendication 1, le système de fichiers étant formaté comme une table d'allocation de fichiers (FAT), une table d'allocation de fichiers étendue (exFAT) ou un système de fichiers de nouvelle technologie (NTFS).

3. Procédé selon la revendication 1 ou 2, les unités de stockage de la mémoire tampon en anneau, lesquelles contiennent les données en temps réel, étant dotées d'un code d'identification apte au tri et/ou les unités de stockage étant transférées au support de stockage dans un ordre trié.

4. Procédé selon l'une des revendications précédentes, les données en temps réelles comprenant des métadonnées (304b).

5. Procédé selon la revendication 4, les métadonnées étant sélectionnées dans le groupe de données d'informations d'enregistrement ou de données d'informations de section, et/ou les métadonnées contenant un numéro de secteur physique.

6. Procédé selon l'une des revendications précédentes, les données en temps réel étant composées d'éléments individuels (300b) et les éléments contenant un identifiant d'élément, la longueur de données de l'élément actuel et/ou les données enregistrées en relation avec le traitement médical.

7. Procédé selon l'une des revendications précédentes, la mémoire tampon en anneau (300a) étant divisée en plusieurs sous-mémoires tampon (301a, 301b, 301c).

8. Procédé selon la revendication 7, au moins une sous-mémoire tampon fournissant des unités de stockage destinées à des données relatives à un traitement médical (302a), et une sous-mémoire tampon fournissant des unités de stockage destinées à des métadonnées (302b), et une sous-mémoire tampon fournissant des unités de stockage destinées à des données de commande (302c),
ou au moins une sous-mémoire tampon fournissant des unités de stockage destinées à des données relatives au traitement médical et une sous-mémoire tampon fournissant des unités de stockage destinées à des métadonnées et une sous-mémoire tampon fournissant des unités de stockage destinées à des données de commande,
et chaque unité de stockage de la sous mémoire tampon destinée à des données relatives à un traitement médical étant temporairement stockée conjointement avec des unités de stockage de la sous-mémoire tampon destinées à des données de commande,
et/ou chaque unité de stockage de la sous-mémoire tampon destinée à des métadonnées étant temporairement stockée conjointement avec des secteurs de la sous mémoire tampon destinée à des données de commande.

9. Procédé selon l'une des revendications précédentes, les unités de stockage qui contiennent les données en temps réel étant chacune cryptées et/ou authentifiées,
et/ou au moins une zone de stockage d'une unité de stockage, qui contient des données en temps réel, étant prévue pour des données d'authentification.

10. Procédé selon l'une des revendications précédentes, la mémoire tampon en anneau, les sous-mémoires tampon et/ou le support de stockage étant divisés en blocs de stockage (400b, 400c, 400d) qui sont chacun composés d'un nombre fixe d'unités de stockage.

11. Procédé selon la revendication 10, les blocs de stockage (400b, 400c, 400d) recevant un code d'identification de bloc de stockage qui est sélectionné parmi au moins trois états d'identification de bloc de stockage distincts (A, B, C),
tous les blocs de stockage de la mémoire tampon en anneau (203) ou de la sous-mémoire tampon étant transférés vers le support de stockage (206) au cours d'une séquence (400a, 401a, 402a, 403a) et ce processus étant répété en continu de sorte qu'il en résulte une première séquence (400a) et d'autres séquences (401a, 402a, 403a) suivant la première séquence,
les blocs de stockage (400b, 400c, 400d) à l'intérieur de la première séquence (400a) ayant un premier état d'identification de bloc de stockage (A),
les autres séquences (401a, 402a, 403a) étant **caractérisées en ce que** les blocs de stockage à l'intérieur des autres séquences ont chacun des états d'identification de bloc de stockage (B, C) différents des états d'identification de bloc de stockage (A) des blocs de stockage de la première séquence (400a),
les états d'identification de bloc de stockage des blocs de stockage différant chacun d'une séquence (401a) des autres séquences à une séquence suivante (402a),
les états d'identification de bloc de stockage des blocs de stockage (401b - 401d, 402b - 402d, 403b - 403d) des autres séquences (401a, 402a, 403a) formant une séquence répétitive d'états d'identification de bloc de stockage.

12. Dispositif médical (100) destiné à effectuer un traitement médical, ledit dispositif médical comprenant :
des capteurs (200a, 200b, 200c, 200d) destinés à enregistrer des données en temps réel relatives à un traitement médical,
une interface de données (202) destinée au transfert des données en temps réel,
un support de stockage (206) qui est alimenté en tension de fonctionnement et sur lequel sont écrites les données en temps réel par le biais de l'interface de données (202),
un ensemble d'unités de stockage du support de stockage étant pré-alloué dans un système de fichiers du support de stockage pour stocker les données en temps réel,
une mémoire tampon en anneau (203) destinée à stocker temporairement les données en temps réel
le dispositif médical (100) étant conçu pour transférer les données en temps réel de la mémoire tampon en anneau (203) vers le support de stockage (206) et pour les stocker sur une unité de stockage du support de stockage uniquement si une valeur mesurée de la tension de fonctionnement est située dans une zone de référence spécifiée (204a).

13. Dispositif médical selon la revendication 12, conçu pour : l'hémodialyse, l'hémofiltration, l'hémodiafiltration, la dialyse péritonéale, l'aphérèse ou la plasmaphérèse.

14. Programme informatique, comprenant des instructions qui, lorsque le programme est exécuté par un ordinateur, amènent celui-ci à mettre en œuvre le procédé selon l'une des revendications 1 à 11.

15. Support de données lisible par ordinateur sur lequel est stocké le programme informatique selon la revendication 14.
